# EUROPEAN PATENT SPECIFICATION

(11) **EP 3 158 099 B1**
(45) Date of publication and mention of the grant of the patent: **11.03.2020**
(21) Application number: 14894914.2
(22) Date of filing: 28.11.2014
(51) Int. Cl.: C22C 38/04, C22C 38/20, C22C 38/38, C22C 38/16, C21D 6/00, C21D 8/02, C21D 9/08, C21D 9/46, C21D 8/10, C22C 38/02

(54) **EXPANDABLE HIGH-STRENGTH STEEL MATERIAL AND EXPANDED HIGH-STRENGTH STEEL PIPE HAVING SUPERIOR EXPANDABILITY AND COLLAPSE RESISTANCE, AND METHODS FOR MANUFACTURING THEREOF**
DEHNBARES HOCHFESTES STAHLMATERIAL UND GEDEHNTES HOCHFESTES STAHLROHR MIT AUSGEZEICHNETER DEHNBARKEIT UND KNICKRESISTENZ SOWIE VERFAHREN ZUR HERSTELLUNG DAVON
MATÉRIAU EN ACIER À HAUTE RÉSISTANCE POUVANT ÊTRE DUDGEONNÉ ET TUYAU EN ACIER À HAUTE RÉSISTANCE DUDGEONNÉ AYANT UNE APTITUDE AU DUDGEONNAGE ET UNE RÉSISTANCE À L'ÉCRASEMENT SUPÉRIEURES ET SES PROCÉDÉS DE FABRICATION

(30) Priority: 17.06.2014 KR 20140073369
(43) Date of publication of application: 26.04.2017
(73) Proprietor: POSCO, Gyeongsangbuk-do 790-300 (KR)
(72) Inventor: LEE, Hak-Cheol, Pohang-si Gyeongsangbuk-do 790-360 (KR); SUH, In-Shik, Pohang-si Gyeongsangbuk-do 790-360 (KR); LEE, Soon-Gi, Pohang-si Gyeongsangbuk-do 790-360 (KR); LEE, Hong-Ju, Pohang-si Gyeongsangbuk-do 790-360 (KR)
(74) Representative: Zech, Stefan Markus
(86) International application number: PCT/KR2014/011531
(87) International publication number: WO 2015/194717

(56) References cited:
- WO-A1-93/13233
- WO-A1-2006/082104
- JP-A- H09 249 940
- JP-A- 2012 036 439
- JP-A- 2012 036 439
- KR-A- 20130 076 575
- US-A1- 2008 240 969
- US-A1- 2008 240 969
- US-A1- 2012 070 330
- US-A1- 2012 186 704

## Description

### Technical Field

The present disclosure relates to an expandable high-strength steel material and an expanded high-strength steel pipe having superior expandability and collapse resistance, and methods for manufacturing the expandable high-strength steel material and the expanded high-strength steel pipe.

### Background Art

In general, when steel pipes are installed below the surface of the earth in an oilfield (underground), a hole is initially drilled into the earth to a predetermined depth, and sections of steel pipe called "casing" are installed therein to prevent the collapse of the hole. Thereafter, the hole is further drilled from the lower end of the casing to create a deeper well, and a new casing is installed through the previously installed casing. This work is repeated so as to finally connect oil well pipes (tubing) to an oil layer. If a very deep well is drilled, various kinds of casings having different diameters are used. Since the diameter of oil well pipes through which oil or gas flows is fixed, it is necessary to increase a drilling area in the diameter direction of the oil well tubes by using various kinds of casings. Therefore, steel pipes used as casings are required to have superior expandability.

Such a steel pipe is expanded by stress acting in an outward direction of the steel pipe. However, if inward stress is generated in the steel pipe by external force applied thereto, that is, if compressive stress is generated in the steel pipe, the resistance of the steel pipe to the compressive stress decreases sharply. This is known as the Bauschinger effect: if a plastically deformed material is subjected to stress acting in a direction opposite to the direction of the plastic deformation, the material is deformed, even in the case that the amount of stress is lower than the original compressive yield strength of the material. Therefore, expandable steel pipes are required to have a high degree of compressive yield strength (i.e., a high degree of collapse resistance) as well as a high degree of expandability.

In the related art, low-strength carbon steel having a ferrite-pearlite structure and a high degree of elongation is used to manufacture expandable steel pipes. A typical technique is disclosed in Patent Document 1. However, the application of the carbon steel disclosed in Patent Document 1 as an expandable steel material is limited, because the disclosed carbon steel has a low degree of expandability on the level of less than about 20%. In addition, it is difficult to obtain a desired degree of strength after the carbon steel is expanded, and the collapse resistance of the carbon steel is low due to the Bauschinger effect.

On the other hand, Patent Document 2 relates to a steel material for automobiles, a TWIP steel, used to implement a high tensile strength-elongation balance value. However, since the TWIP steel has a single-phase austenite structure in a steel state or even after processing thereof to form an automobile component, there are difficulties in terms of securing high collapse resistance.

Patent Document 3 relates to a steel pipe for an oil well pipe, in which in a primary heat treatment, the microstructure is controlled to be 60% or more of martensite with a remainder of residual austenite. In a secondary heat treatment thereof, the tempered martensite is used as a main phase, and a second phase except the martensite phase is controlled to be a residual γ phase with 30 volume% or less of a ferrite phase, thereby improving expandability and strength. However, Patent Document 3 provides a technique for only improving tensile strength, and has a disadvantage in that because no consideration is made to improve compressive yield strength, it is difficult to secure high collapse resistance.

### [Related Art Document]

(Patent Document 1) Japanese Patent No. 4833835
(Patent Document 2) U.S. Patent Application Publication No. 2008/240969
(Patent Document 3) Japanese Laid-Open Patent Publication No. 2012-036439

### Disclosure of Invention

### Technical Problem

Aspects of the present disclosure may include an expandable high-strength steel material and an expanded high-strength steel pipe having excellent expandability and collapse resistance, and methods for manufacturing the expandable high-strength steel material and the expanded high-strength steel pipe.

### Solution to Problem

According to an aspect of the present disclosure, an expandable high-strength steel material having superior expandability and collapse resistance includes, by weight, manganese (Mn): 12% to 18%, carbon (C): 0.3% to 0.6%, chromium (Cr): 5% or less, optionally further comprising copper (Cu): 2% or less, and a balance of iron (Fe) and inevitable impurities, wherein the carbon (C) and the manganese (Mn) satisfy the following condition: 23 ≤ 35.5C + Mn ≤38, and the expandable high-strength steel material has an austenite single phase microstructure, and the steel material has a microstructure consisting of 5 area% to 50 area% martensite and 50 area% to 95 area% austensite after expansion.

According to another aspect of the present disclosure, an expanded high-strength steel pipe having superior expandability and collapse resistance includes, by weight, manganese (Mn): 12% to 18%, carbon (C): 0.3% to 0.6%, (Cr): 5% or less, optionally further comprising copper (Cu): 2% or less, and a balance of iron (Fe) and inevitable impurities, wherein the carbon (C) and the manganese (Mn) satisfy the following condition: 23 ≤ 35.5C + Mn ≤ 38, and the expanded high-strength steel pipe has a microstructure including 5 area% to 50 area% martensite and 50 area% to 95 area% austenite.

According to another aspect of the present disclosure, a method for manufacturing an expandable high-strength steel material having superior expandability and collapse re-sistance includes: reheating a steel slab and hot-rolling the steel slab at a finish rolling temperature of 850°C to 1050°C to obtain a hot-rolled steel material, the steel slab including, by weight, manganese (Mn): 12% to 18%, carbon (C): 0.3% to 0.6%, chromium (Cr): 5% or less, optionally further comprising copper (Cu): 2% or less, and a balance of iron (Fe) and inevitable impurities, the carbon (C) and the manganese (Mn) satisfying the following condition: 23 ≤ 35.5C + Mn ≤ 38; and cooling the hot-rolled steel material to a temperature of 500°C or lower at a rate of 5°C/s or higher and the expandable high-strength steel material has an austensite single phase microstructure, and the steel material has a microstructure consisting of 5 area% to 50 area% martensite and 50 area% to 95 area% austensite after expansion.

According to another aspect of the present disclosure, a method for manufacturing an expanded high-strength steel pipe having superior expandability and collapse resistance includes: forming a hot-rolled steel material into a steel pipe; and expanding the steel pipe at a strain of 1% to 10%, wherein the hot-rolled steel material includes, by weight, manganese (Mn): 12% to 18%, carbon (C): 0.3% to 0.6%, chromium (Cr): 5% or less, optionally further comprising copper (Cu): 2% or less, and a balance of iron (Fe) and inevitable impurities, the carbon (C) and the manganese (Mn) satisfy the following condition: 23 ≤ 35.5C + Mn ≤ 38, and the hot-rolled steel material has an austenite single phase microstructure before expanding, and the steel pipe has a microstructure consisting of 5 area% to 50 area% martensite and 50 area% to 95 area% austensite after expanding.

### Advantageous Effects of Invention

Embodiments of the present disclosure provide an expandable high-strength steel material, an expanded high-strength steel pipe, and methods for manufacturing the ex-pandable high-strength steel material and the expanded high-strength steel pipe. The expandable high-strength steel material and the expanded high-strength steel pipe have a high degree of uniform elongation and a high degree of expandability, and a high degree of compressive yield strength, owing to martensite formed when the steel pipe is processed to have a circular shape after the steel pipe is formed.

### Brief Description of Drawings

FIG. 1 illustrates a microstructure of Inventive Sample 3 according to an exemplary embodiment of the present disclosure.
FIG. 2 illustrates a microstructure of Comparative Example 5 departing from the scope of the present invention.

### Best Mode for Carrying out the Invention

The inventors have conducted research into methods of solving problems of existing expandable steel materials and have obtained the following knowledge. High-manganese steel, which is an austenite-based steel material, has a high degree of uniform elongation, and thus the expandability of the high-manganese steel is high. However, the stability of austenite in a negative segregation zone of the high-manganese steel is low due to an alloying composition difference between the negative segregation and a positive segregation zone. Therefore, if austenite formed in a negative segregation zone is deformed by expansion and is thus transformed into martensite, many dislocations are formed, and the Bauschinger effect is weakened by such dislocations. Based on this knowledge, the inventors invented the present invention.

Exemplary embodiments of the present disclosure will now be described.

### Manganese (Mn): 12 wt% to 18 wt%

Manganese (Mn), which is a representative element stabilizing austenite, improves uniform elongation and expandability. In addition, manganese (Mn) segregates in a steel material during a casting process. In an exemplary embodiment of the present disclosure, during expansion, this segregation behavior of manganese (Mn) is used for stabilizing austenite in a positive segregation zone in which manganese (Mn) actively segregates and for transforming austenite into martensite in a negative segregation zone having a relatively low manganese (Mn) content compared to the positive seg-regation zone. Finally, a steel material having improved collapse resistance owing to a layered structure in which austenite and martensite repeat in the thickness direction of the steel material is provided. However, if the content of manganese (Mn) in the steel material is less than 12 wt%, the stability of austenite is low, and thus martensite may be formed. That is, it may be difficult to maintain an austenite single-phase structure, and thus the expandability of the steel material may be lowered. On the other hand, if the content of manganese (Mn) is greater than 18 wt%, the stability of austenite in a negative segregation zone may be excessively high, and thus transformation from austenite into martensite may not occur in the negative segregation zone even in the case that the negative segregation zone is deformed by expansion. Therefore, it is preferable that the content of manganese (Mn) be within the range of 12 wt% to 18 wt%. Preferably, the lower limit of the content of manganese (Mn) may be 13 wt%, more preferably, 14 wt%. In addition, preferably, the upper limit of the content of manganese (Mn) may be 17 wt%, more preferably, 16 wt%.

### Carbon (C): 0.3 wt% to 0.6 wt%

Carbon (C) is an element stabilizing austenite and improving the degree of uniform elongation, strength, and work hardening of a steel material. Carbon (C) also has a tendency to segregate in a region in which manganese (Mn) segregates, thereby facilitating the formation a layered structure in which austenite and martensite repeat and improving the collapse resistance of a steel material. However, if the content of carbon (C) in a steel material is less than 0.3 wt%, the effects of improving the strength and work hardening of the steel material are low, and the stability of austenite in the steel material may be low to cause austenite-to-martensite transformation. That is, an austenite single phase structure may not be maintained in the steel material, and thus the expandability of the steel material may be lowered. On the other hand, if the content of carbon (C) in the steel material is greater than 0.6 wt%, large amounts of carbides may precipitate, and thus a high degree of expandability may not be obtained. In addition, the stability of austenite formed in a negative segregation zone of the steel material may be excessively high, and thus even in the case that the austenite in the negative segregation zone is deformed by expansion, the austenite may not be transformed into martensite. Therefore, it is preferable that the content of carbon (C) be within the range of 0.3 wt% to 0.6 wt%. Preferably, the lower limit of the content of carbon (C) may be 0.35 wt%, more preferably, 0.4 wt%. In addition, preferably, the upper limit of the content of carbon (C) may be 0.55 wt%, more preferably, 0.5 wt%.

In an exemplary embodiment of the present disclosure, a steel material includes manganese (Mn) and carbon (C) within the above-mentioned ranges and satisfies the following composition formula: 23 ≤ 35.5C + Mn ≤ 38. If 35.5C + Mn is less than 23, the stability of austenite may be low, and thus it may be difficult to obtain an austenite single phase structure and a desired degree of expandability. On the other hand, if 35.5C + Mn is greater than 38, the stability of austenite may be excessive, and thus even after the steel material is expanded, austenite may not be transformed into martensite in a negative segregation zone, thereby lowering the collapse resistance of the steel material.

If the steel material of the embodiment of the present disclosure has the above-mentioned alloying composition and satisfies the composition formula, the expandability and collapse resistance of the steel material may be superior even in the case that the steel material does not include additional alloying elements. However, due to the reasons described below, the steel material further includes chromium (Cr): 5 wt% or less, and may further include copper (Cu): 2 wt% or less.

### Chromium (Cr): 5 wt% or less

Chromium (Cr) is an element increasing the strength of the steel material. However, if the content of chromium (Cr) in the steel material is greater than 5 wt%, large amounts of carbides may precipitate, and thus the degree of elongation of the steel material may be lowered.

### Copper (Cu): 2 wt% or less

Copper (Cu) is an element improving the degree of elongation of the steel material and the corrosion resistance of the steel material as well. However, if the content of copper (Cu) in the steel material is greater than 2 wt%, the stability of austenite in the steel material may be too high, and thus the austenite may not be transformed into martensite.

In addition, the steel material of the embodiment of the present disclosure may further include a small amount of aluminum (Al). However, since aluminum (Al) stabilizes austenite and hinders austenite from transforming into martensite in the negative segregation zone of the steel material, the negative segregation zone may have an austenite single phase structure even after the steel material is expanded. Therefore, the steel material of the embodiment of the present disclosure may not include aluminum (Al).

The steel material of the embodiment of the present disclosure may have an austenite single phase structure for a high degree of uniform elongation and a high degree of work hardening. However, carbides may inevitably precipitate in the microstructure of the steel material during manufacturing processes, and it may be preferable that the fraction of carbide precipitates in the steel material be controlled to be within an amount of 1 area% or less. If the fraction of carbide precipitates is greater than 1 area%, the degree of elongation of the steel material may be lowered, and the steel material may not have a high degree of expandability.

In the steel material of the embodiment of the present disclosure, austenite existing in the negative segregation zone is transformed into martensite during an expansion process, thereby creating many dislocations in the internal structure of the steel material and forming a layer structure in which the martensite and austenite of a positive segregation zone are repeatedly formed in the thickness direction of the steel material. Thus, the steel material may be less affected by the Bauschinger effect.

In the steel material, it is preferable that the faction of martensite range from 5 area% to 50 area%, and the fraction of austenite range from 50 area% to 95 area%. If the fraction of martensite is greater than 50 area% or the fraction of austenite is less than 50 area%, cracks may be formed in the martensite due to an excessive fraction of the martensite, and the degree of elongation of the steel material may be lowered due to an insufficient fraction of the austenite. On the other hand, if the fraction of martensite is less than 5 area% or the fraction of austenite is greater than 95 area%, the Bauschinger effect may not be suppressed, and thus the compressive yield strength of the steel material may be lowered.

As described above, according to the embodiment of the present disclosure, the steel material has the above-described alloying composition and a microstructure including martensite in an amount of 5 area% to 50 area% and austenite in an amount of 50 area% to 95 area%. When an expansion test in which both ends of a sample are fixed is performed on the steel material, the degree of expansion of the steel material may be 30% or greater, and since the steel material has a layer structure in which austenite and martensite are alternately formed, the steel material may have a high compressive yield strength of 500 MPa or greater and thus a high degree of collapse resistance after the steel material is expanded.

Hereinafter, a method for manufacturing a steel material and a steel pipe will be described in detail, according to exemplary embodiments of the present disclosure.

First, a steel slab having the above-described alloying composition is subjected to a reheating process and a hot rolling process to form a hot-rolled steel material. In the above, it is preferable that the hot rolling process be performed at a finish rolling temperature of 850°C to 1050°C. If the finish hot rolling temperature is lower than 850°C, carbides may precipitate to result in a decrease in the degree of uniform elongation of the steel slab, and the grains of the microstructure of the steel slab may be changed into pancake grains to result in non-uniform elongation caused by the anisotropy of the microstructure. On the other hand, if the finish hot rolling tem-perature is higher than 1050°C, grains of the steel slab may become coarse, and the strength of the steel slab may be lowered. Therefore, it is preferable that the finish hot rolling temperature be within the range of 850°C to 1050°C. In addition, the reheating process is performed within a temperature range common in the related art. That is, in the embodiments of the present disclosure, the temperature of the reheating process is not particularly limited.

Preferably, the hot-rolled steel material obtained after the hot rolling process may be cooled to a temperature of 600°C or lower at a rate of 5°C/s or higher, so as to suppress the precipitation of carbides in grain boundaries and thus to prevent a decrease in the expandability of the hot-rolled steel material. If the cooling rate is less then 5°C/s or the cooling stop temperature is higher than 600°C, carbides may precipitate to lower the degree of elongation of the hot-rolled steel material. Therefore, it may be preferable that the hot-rolled steel material be cooled to a temperature of 600°C or lower at a rate of 5°C or higher. Preferably, the cooling rate may be 10°C/s or higher, more preferably, 15°C/s or higher. However, it may be difficult to increase the cooling rate to a value greater than 500°C/s due to limitations on process conditions. Since effects of the embodiments of the present disclosure are obtainable as long as the cooling stop temperature is 600°C or lower, the lower limit of the cooling stop temperature is not particularly limited. Preferably, the cooling stop temperature is 500°C or lower.

Thereafter, the hot-rolled steel material cooled as described above is formed into a steel pipe. The steel pipe formed as described above does not have a circular shape, and thus, it may be difficult to use the steel pipe. Therefore, a process for adjusting the shape of the steel pipe to have a circular shape may be performed. In the process, the steel pipe is contracted or expanded at a strain of 1% to 10%. This is different from the case in which the steel pipe is expanded for being used as a casing after the steel pipe is manufactured.

### Mode for the Invention

Hereinafter, the embodiments of the present disclosure will be described more specifically through examples. However, the examples are for clearly explaining the exemplary embodiments and are not intended to limit the scope of the embodiments.

### (Examples)

Steel slabs having alloying compositions shown in Table 1 were processed under conditions shown in Table 2 so as to form hot-rolled steel materials. The hot-rolled steel materials were formed into steel pipes, and the steel pipes were processed with a deformation of 5% so that the steel pipes could have a circular shape. Thereafter, the fractions of microstructures in the steel pipes and the expandability of the steel pipes were measured as shown in Table 3. In addition, the steel pipes were expanded at an expansion ratio of 30%, and then the fractions of microstructures of the steel pipes and the compressive yield strength of the steel pipes were measured as shown in Table 3.

### Table 1

**[Table 1]**

| Samples | Chemical composition (wt%) | | | | |
|---|---|---|---|---|---|
| | Mn | C | 23=35.5C+Mn=38 | Cr | Cu |
| Inventive Steel 1 | 13.5 | 0.3 | 23.55 | - | - |
| Inventive Steel 2 | 15.1 | 0.4 | 28.50 | - | - |
| Inventive Steel 3 | 16.2 | 0.5 | 32.95 | - | - |
| Inventive Steel 4 | 17.1 | 0.55 | 35.53 | - | - |
| Comparative Steel 1 | 12.1 | 0.31 | **22.49** | - | - |
| Comparative Steel 2 | 18 | 0.6 | **38.10** | - | - |
| Comparative Steel 3 | **20** | **0.15** | 25.03 | - | - |
| Inventive Steel 5 | 16.1 | 0.48 | 32.18 | 2.2 | - |
| Inventive Stee 16 | 14.9 | 0.42 | 28.97 | - | 1.1 |

### Table 2

**[Table 2]**

| Samples | Steel No. | Finishhot rolling Temp.(°C ) | Cooling rate (°C/s) | Cooling stop Temp.(°C ) |
|---|---|---|---|---|
| Inventive Example 1 | Inventive Steel 1 | 880 | 45 | 350 |
| Comparative Example 1 | Inventive Steel 1 | **840** | 15 | 300 |
| Inventive Example 2 | Inventive Steel 2 | 910 | 32 | 490 |
| Inventive Example 3 | Inventive Steel 3 | 940 | 18 | 510 |
| Comparative Example 2 | Inventive Steel 3 | 920 | **4** | 300 |
| Inventive Example 4 | Inventive Steel 4 | 1020 | 11 | 280 |
| Comparative Example 3 | Inventive Steel 4 | 890 | 22 | **650** |
| Comparative Example 4 | Comparative Steel 1 | 920 | 27 | 440 |
| Comparative Example 5 | Comparative Steel 2 | 960 | 14 | 520 |
| Comparative Example 6 | Comparative Steel 3 | 890 | 32 | 370 |
| Inventive Example 5 | Inventive Steel 5 | 940 | 25 | 390 |
| Inventive Example 6 | Inventive Steel 6 | 910 | 16 | 450 |

### Table 3

**[Table 3]**

| Samples | Microstructure Fraction (area%) | | | Maximum expansion( %) | Compressive yieldstrength( MPa)afterexp ansion |
|---|---|---|---|---|---|
| | γfraction before expansion | γfractionafter expansion | M fraction-afterexpansi on | | |
| Inventive Example 1 | 100 | 53 | 47 | 39 | 632 |
| Comparative Example 1 | **98**(carbides formed) | 66 | 62 | **24** | Not measurable |
| Inventive Example 2 | 100 | 66 | 34 | 46 | 605 |
| Inventive Example 3 | 100 | 76 | 24 | 51 | 582 |
| Comparative Example 2 | **97.5**(carbide s formed) | 81.5 | 16 | **21** | Not measurable |
| Inventive Example 4 | 100 | 91 | 9 | 55 | 534 |
| Comparative Example 3 | **92.5**(carbide s formed) | 88.2 | 7 | **16** | Not measurable |
| Comparative Example 4 | **91**(M formd) | 29 | 62 | **23** | Not measurable |
| Comparative Example 5 | 100 | 97 | **3** | 46 | **482** |
| Comparative Example 6 | 100 | 62 | 38 | 38 | **436** |
| Inventive Example 5 | 100 | 80 | 20 | 52 | 635 |
| Inventive Example 6 | 100 | 71 | 29 | 49 | 575 |
| γrefers to austenite, and M refers to martensite | | | | | |

As shown in Tables 1 to 3, Inventive samples 1 to 6 satisfying the alloying compositions and process conditions proposed in the embodiments of the present disclosure had an austenite single phase structure before being expanded and a microstructure formed by 5 area% to 50 area% martensite and 50 area% to 95 area% austenite after being expanded, and thus Inventive samples 1 to 6 have superior expandability and compressive yield strength.

Comparative Samples 1 to 3 satisfied the alloying compositions proposed in the embodiments of the present disclosure but did not satisfy the process conditions proposed in the embodiments of the present disclosure. Thus, carbides precipitated in the Comparative Samples 1 to 3 during a rolling process (Comparative Sample 1) or a cooling process (Comparative Sample 2), or after the cooling process (Comparative Sample 3). Therefore, Comparative Samples 1 to 3 had low degrees of uniform elongation and thus low degrees of expansion. In addition, Comparative Samples 1 to 3 were fractured during expansion, and thus compressive yield strength thereof could not be measured.

Comparative Sample 4 did not satisfy the condition (≥23) of the composition formula proposed in the embodiments of the present disclosure, and thus martensite was prematurely formed in a negative segregation zone before expansion and was excessive after expansion. Therefore, Comparative Sample 4 had a low degree of expansion.

Comparative Sample 5 did not satisfy the condition (≤38) in the composition formula proposed in the embodiments of the present disclosure. Thus, austenite was excessively stabilized, and after expansion, the amount of martensite transformed from austenite was low. Therefore, the Bauschinger effect was large, and thus Comparative Sample 5 had a low degree of compressive yield strength.

Comparative Sample 6 had a very low carbon (C) content, and thus even though transformation into martensite occurred, Comparative Sample 6 had a low degree of compressive yield strength due to the low carbon (C) content.

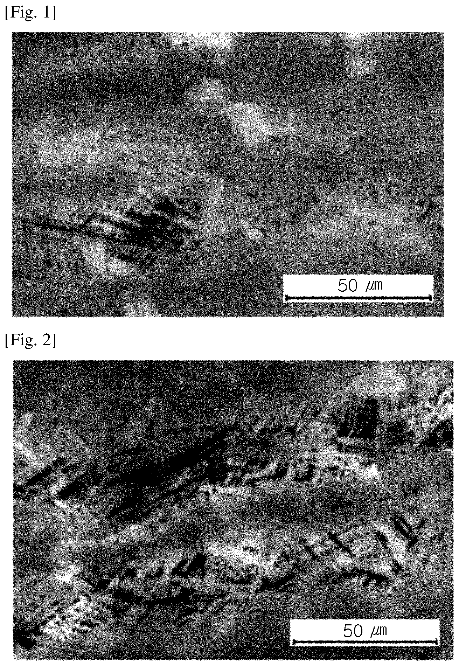

FIG. 1 illustrates a microstructure image of Inventive Sample 3, and FIG. 2 is an microstructure image of Comparative Sample 5. Referring to FIG. 1, if the conditions of the embodiments of the present disclosure are satisfied, martensite is formed in a proper fraction after expansion. However, if the alloying composition of the embodiments of the present disclosure is not satisfied, a low amount of martensite is formed as shown in FIG. 2, and thus the Bauschinger effect increases.

## Claims

1. An expandable high-strength steel material having superior expandability and collapse resistance, the expandable high-strength steel material consisting of, by weight, manganese (Mn): 12% to 18%, carbon (C): 0.3% to 0.6%, chromium (Cr): 5% or less, optionally further comprising copper (Cu): 2% or less, and a balance of iron (Fe) and inevitable impurities,
wherein the carbon (C) and the manganese (Mn) satisfy the following condition: 23 ≤ 35.5C + Mn ≤ 38, and the expandable high-strength steel material has an austenite single phase microstructure, and
wherein the steel material has a microstructure consisting of 5 area% to 50 area% martensite and 50 area% to 95 area% austenite after expansion.

2. An expanded high-strength steel pipe having superior expandability and collapse resistance, the expandable high-strength steel material consisting of, by weight, manganese (Mn): 12% to 18%, carbon (C): 0.3% to 0.6%, chromium (Cr): 5% or less, optionally further comprising copper (Cu): 2% or less, and a balance of iron (Fe) and inevitable impurities,
wherein the carbon (C) and the manganese (Mn) satisfy the following condition: 23 ≤ 35.5C + Mn ≤ 38, and
the expanded high-strength steel pipe has a microstructure consisting of 5 area% to 50 area% martensite and 50 area% to 95 area% austenite.

3. The expanded high-strength steel pipe of claim 2, wherein the martensite and the austenite are alternately formed in a diameter direction of the steel pipe.

4. The expanded high-strength steel pipe of claim 2, wherein the steel pipe has an expansion of 30% or greater when being expanded under a test condition in which both ends thereof are fixed.

5. A method for manufacturing an expandable high-strength steel material having superior expandability and collapse resistance, the method comprising:
reheating a steel slab and hot-rolling the steel slab at a finish rolling temperature of 850°C to 1050°C to obtain a hot-rolled steel material, the steel slab consisting of, by weight, manganese (Mn): 12% to 18%, carbon (C): 0.3% to 0.6%, chromium (Cr): 5% or less, optionally further comprising copper (Cu): 2% or less, and a balance of iron (Fe) and inevitable impurities, the carbon (C) and the manganese (Mn) satisfying the following condition: 23 ≤ 35.5C + Mn ≤ 38; and
cooling the hot-rolled steel material to a temperature of 500°C or lower at a rate of 5°C/s or higher and the expandable high-strength steel material has an austenite single phase microstructure, and
wherein the steel material has a microstructure consisting of 5 area% to 50 area% martensite and 50 area% to 95 area% austenite after expansion.

6. A method for manufacturing an expanded high-strength steel pipe having superior expandability and collapse resistance, the method comprising:
forming a hot-rolled steel material into a steel pipe; and
expanding the steel pipe at a strain of 1% to 10%,
wherein the hot-rolled steel material consists of, by weight, manganese (Mn): 12% to 18%, carbon (C): 0.3% to 0.6%, chromium (Cr): 5% or less, optionally further comprising copper (Cu): 2% or less, and a balance of iron (Fe) and inevitable impurities, the carbon (C) and the manganese (Mn) satisfy the following condition: 23 ≤ 35.5C + Mn ≤ 38, and
the hot-rolled steel material has an austenite single phase microstructure before expanding, and
the steel pipe has a microstructure consisting of 5 area% to 50 area% martensite and 50 area% to 95 area% austenite after expanding.

7. The method of claim 6, wherein after the forming of the hot-rolled steel material into the steel pipe, the method further comprises adjusting the steel pipe to have a circular shape.

## Patentansprüche

1. Streckbares, hochfestes Stahlmaterial mit überlegener Streckbarkeits- und Einfallbeständigkeit, wobei das streckbare, hochfeste Stahlmaterial in Gewicht besteht aus Mangan (Mn): 12 % bis 18 %, Kohlenstoff (C):0,3 % bis 0,6 %, Chrom (Cr): 5 % oder weniger, optional darüber hinaus Kupfer (Cu): 2 % oder weniger umfassend, und einem Rest aus Eisen (Fe) und unvermeidbaren Verunreinigungen,
wobei der Kohlenstoff (C) und das Mangan (Mn) die folgende Bedingung erfüllen:
23 ≤ 35,5C + Mn ≤ 38, und das streckbare, hochfeste Stahlmaterial eine Austeniteinzelphasenstruktur hat, und
wobei das Stahlmaterial eine Mikrostruktur hat, die aus 5 Flächen-% bis 50 Flächen-% Martensit und 50 Flächen-% bis 95 Flächen-% nach einer Streckung besteht.

2. Streckbares, hochfestes Stahlrohr mit überlegener Streckbarkeits- und Einfallbeständigkeit, wobei das streckbare, hochfeste Stahlmaterial in Gewicht besteht aus Mangan (Mn): 12 % bis 18 %, Kohlenstoff (C):0,3 % bis 0,6 %, Chrom (Cr): 5 % oder weniger, optional darüber hinaus Kupfer (Cu): 2 % oder weniger umfassend, und einem Rest aus Eisen (Fe) und unvermeidbaren Verunreinigungen,
wobei der Kohlenstoff (C) und das Mangan (Mn) die folgende Bedingung erfüllen:
23 ≤ 35,5C + Mn ≤ 38, und
das gestreckte, hochfeste Stahlrohr eine Mikrostruktur hat, die aus 5 Flächen-% bis 50 Flächen-% Martensit und 50 Flächen-% bis 95 Flächen-% Austenit besteht.

3. Gestrecktes, hochfestes Stahlrohr nach Anspruch 2, wobei der Martensit und der Austenit abwechselnd in einer Durchmesserrichtung des Stahlrohrs ausgebildet sind.

4. Gestrecktes, hochfestes Stahlrohr nach Anspruch 2, wobei das Stahlrohr eine Streckung von 30 % oder mehr hat, wenn es unter einer Versuchsbedingung gestreckt wird, bei der dessen beide Enden fixiert sind.

5. Verfahren zum Herstellen eines streckbaren, hochfesten Stahlmaterials mit überlegener Streckbarkeits- und Einfallbeständigkeit, wobei das Verfahren umfasst:
Wiedererwärmen einer Stahlbramme und Warmwalzen der Stahlbramme bei einer Endbearbeitungswalztemperatur von 850° C bis 1050° C, um ein warmgewalztes Stahlmaterial zu erhalten, wobei die Stahlbramme in Gewicht besteht aus Mangan (Mn): 12 % bis 18 %, Kohlenstoff (C):0,3 % bis 0,6 %, Chrom (Cr): 5 % oder weniger, optional darüber hinaus Kupfer (Cu): 2 % oder weniger umfassend, und einem Rest aus Eisen (Fe) und unvermeidbaren Verunreinigungen, wobei der Kohlenstoff (C) und das Mangan (Mn) die folgende Bedingung erfüllen: 23 ≤ 35,5C + Mn ≤ 38; und Abkühlen des warmgewalzten Stahlmaterials auf eine Temperatur von 500° C oder niedriger mit einer Rate von 5° C/s oder höher, und das streckbare, hochfeste Stahlmaterial eine Austeniteinzelphasenstruktur hat, und
wobei das Stahlmaterial eine Mikrostruktur hat, die aus 5 Flächen-% bis 50 Flächen-% Martensit und 50 Flächen-% bis 95 Flächen-% nach einer Streckung besteht.

6. Verfahren zum Herstellen eines streckbaren, hochfesten Stahlmaterials mit überlegener Streckbarkeits- und Einfallbeständigkeit, wobei das Verfahren umfasst:
Umformen eines warmgewalzten Stahlmaterials zu einem Stahlrohr; und
Strecken des Stahlrohrs mit einer Streckspannung von 1 % bis 10 %,
wobei das warmgewalzte Stahlmaterial in Gewicht besteht aus Mangan (Mn): 12 % bis 18 %, Kohlenstoff (C):0,3 % bis 0,6 %, Chrom (Cr): 5 % oder weniger, optional darüber hinaus Kupfer (Cu): 2 % oder weniger umfassend, und einem Rest aus Eisen (Fe) und unvermeidbaren Verunreinigungen, wobei der Kohlenstoff (C) und das Mangan (Mn) die folgende Bedingung erfüllen: 23 ≤ 35,5C + Mn ≤ 38, und
das warmgewalzte Stahlmaterial eine Austeniteinzelphasenstruktur vor der Streckung hat, und
das Stahlrohr eine Mikrostruktur hat, die aus 5 Flächen-% bis 50 Flächen-% Martensit und 50 Flächen-% bis 95 Flächen-% nach der Streckung besteht.

7. Verfahren nach Anspruch 6, wobei nach dem Umformen des warmgewalzten Stahlmaterials zu dem Stahlrohr das Verfahren darüber hinaus umfasst, das Stahlrohr so anzupassen, dass es eine Kreisform hat.

## Revendications

1. Matériau en acier à haute résistance expansible présentant une expansibilité et une résistance à l'éclatement supérieures, le matériau en acier à haute résistance expansible étant composé de, en poids, manganèse (Mn) : 12 % à 18 %, carbone (C) : 0,3 % à 0,6 %, chrome (Cr) : 5 % ou moins, facultativement comprenant en outre du cuivre (Cu) : 2 % ou moins, et un solde de fer (Fe) et d'impuretés inévitables,
sachant que le carbone (C) et le manganèse (Mn) satisfont à la condition suivante :
23 ≤ 35,5C + Mn ≤ 38, et le matériau en acier à haute résistance expansible présente une microstructure monophasée d'austénite, et
sachant que le matériau en acier présente une microstructure composée de 5 % de surface à 50 % de surface de martensite et de 50 % de surface à 95 % de surface d'austénite après expansion.

2. Tube en acier à haute résistance expansé présentant une expansibilité et une résistance à l'éclatement supérieures, le matériau en acier à haute résistance expansible étant composé de, en poids, manganèse (Mn) : 12 % à 18 %, carbone (C) : 0,3 % à 0,6 %, chrome (Cr) : 5 % ou moins, facultativement comprenant en outre du cuivre (Cu) : 2 % ou moins, et un solde de fer (Fe) et d'impuretés inévitables,
sachant que le carbone (C) et le manganèse (Mn) satisfont à la condition suivante :
23 ≤ 35,5C + Mn ≤ 38, et
le tube en acier à haute résistance expansé présente une microstructure composée de 5 % de surface à 50 % de surface de martensite et de 50 % de surface à 95 % de surface d'austénite.

3. Le tube en acier à haute résistance expansé de la revendication 2, sachant que la martensite et l'austénite sont formées en alternance dans une direction de diamètre du tube en acier.

4. Le tube en acier à haute résistance expansé de la revendication 2, sachant que le tube en acier a une expansion de 30 % ou plus lorsqu'il est expansé dans une condition de test dans laquelle les deux extrémités sont fixées.

5. Procédé de fabrication d'un matériau en acier à haute résistance expansible présentant une expansibilité et une résistance à l'éclatement supérieures, le procédé comprenant :
le réchauffage d'une brame en acier et le laminage à chaud de la brame en acier à une température de laminage de finition de 850 °C à 1050 °C pour obtenir un matériau en acier laminé à chaud, la brame en acier étant composée de, en poids, manganèse (Mn) : 12 % à 18 %, carbone (C) : 0,3 % à 0,6 %, chrome (Cr) : 5 % ou moins, facultativement comprenant en outre du cuivre (Cu) : 2 % ou moins, et un solde de fer (Fe) et d'impuretés inévitables, le carbone (C) et le manganèse (Mn) satisfaisant à la condition suivante : 23 ≤ 35,5C + Mn ≤ 38 ; et le refroidissement du matériau en acier laminé à chaud à une température de 500 °C ou moins à un taux de 5 °C/s ou plus et le matériau en acier à haute résistance expansible présentant une microstructure monophasée d'austénite, et
sachant que le matériau en acier présente une microstructure composée de 5 % de surface à 50 % de surface de martensite et de 50 % de surface à 95 % de surface d'austénite après expansion.

6. Procédé de fabrication d'un tube en acier à haute résistance expansé présentant une expansibilité et une résistance à l'éclatement supérieures, le procédé comprenant :
le formage d'un matériau en acier laminé à chaud en un tube en acier ; et
l'expansion du tube en acier selon une déformation de 1 % à 10 %,
sachant que le matériau en acier laminé à chaud est composé de, en poids, manganèse (Mn) : 12 % à 18 %, carbone (C) : 0,3 % à 0,6 %, chrome (Cr) : 5 % ou moins, facultativement comprenant en outre du cuivre (Cu) : 2 % ou moins, et un solde de fer (Fe) et d'impuretés inévitables, le carbone (C) et le manganèse (Mn) satisfaisant à la condition suivante : 23 ≤ 35,5C + Mn ≤ 38, et
le matériau en acier laminé à chaud présente une microstructure monophasée d'austénite avant expansion, et
le tube en acier présente une microstructure composée de 5 % de surface à 50 % de surface de martensite et de 50 % de surface à 95 % de surface d'austénite après expansion.

7. Le procédé de la revendication 6, sachant qu'après le formage du matériau en acier laminé à chaud en le tube en acier, le procédé comprend en outre l'ajustage du tube en acier pour qu'il ait une forme circulaire.
